# EUROPÄISCHE PATENTSCHRIFT

(11) **EP 3 864 741 B1**
(45) Veröffentlichungstag und Bekanntmachung des Hinweises auf die Patenterteilung: **28.09.2022**
(21) Anmeldenummer: 19789620.2
(22) Anmeldetag: 10.10.2019
(51) Int. Cl.: H02K 15/02

(54) **ELEKTROMOTOR, BREMSVORRICHTUNG UND FAHRZEUG**
ELECTRIC MOTOR, BRAKE SYSTEM AND VEHICLE
MOTEUR ÉLECTRIQUE, SYSTÈME DE FREINAGE ET VÉHICULE

(30) Priorität: 12.10.2018 DE 102018217558
(43) Veröffentlichungstag der Anmeldung: 18.08.2021
(73) Patentinhaber: Vitesco Technologies GmbH, 93055 Regensburg (DE)
(72) Erfinder: WEIMAR, Jan, 81737 München (DE)
(74) Vertreter: Vitesco Technologies
(86) Internationale Anmeldenummer: PCT/EP2019/077516
(87) Internationale Veröffentlichungsnummer: WO 2020/074660

(56) Entgegenhaltungen:
- WO-A2-2013/168122
- DE-A1-102015 200 089
- DE-A1-102017 205 532
- US-B1- 6 356 005

## Beschreibung

Die vorliegende Erfindung betrifft einen Elektroantrieb, eine Bremsvorrichtung mit einem solchen Elektroantrieb sowie ein Fahrzeug mit einer solchen Bremsvorrichtung.

Der vorgeschlagene Elektroantrieb ist zur Verwendung in einer elektro-hydraulischen Bremsvorrichtung vorgesehen, wobei der Elektroantrieb einen Kugelgewindetrieb antreibt, der als solcher einen Kolben einer Zylinder-Kolben-Anordnung zur Erzeugung eines Bremsdruckes verschiebt.

Unter einem Fahrzeug ist dabei jede Art von Fahrzeug zu verstehen, welches zum Betrieb mit einem flüssigen und/oder gasförmigen Kraftstoff versorgt werden muss, insbesondere aber Personenkraftwagen und/oder Nutzfahrzeuge. Ferner kann es sich beim Fahrzeug auch um ein teilelektrisches oder vollelektrisches Fahrzeug handeln, insbesondere aber um Personenkraftwagen und/oder Nutzfahrzeuge.

Die DE 10 2017 205 532 A1 offenbart einen Stator einer elektrischen Maschine, eine elektrische Maschine, sowie ein Verfahren zum Herstellen einer solchen, insbesondere zum Verstellen beweglicher Teile im Kraftfahrzeug, mit einem Polgehäuse, an dessen Innenwand elektrische Spulen tragende Wicklungsträger anliegen, wobei die Wicklungsträger einen Statorzahn aufweisen, der an einem Jochelement angeformt ist, das radial an der Innenwand anliegt, und auf dem Wicklungsträger eine Isolationsmaske angeordnet ist, die die elektrische Spule gegenüber dem Wicklungsträger isoliert, und die Isolationsmaske sich mit einem axialen Fortsatz axial über das Jochelement hinaus erstreckt, wobei der axiale Fortsatz mit einem in Umfangsrichtung verlaufenden Bund radial an der Innenwand des Polgehäuses anliegt.

Aufgabe der vorliegenden Erfindung ist es, einen möglichst kompakten Elektroantrieb für eine elektro-hydraulische Bremsvorrichtung bereitzustellen, welcher zudem möglichst einfach hergestellt und montiert werden kann. Der Elektroantrieb soll dabei möglichst kostengünstig herstellbar sein.

Diese Aufgabe wird durch einen Elektroantrieb mit den Merkmalen des Anspruchs 1 gelöst. Es wird ferner eine Verwendung eines solchen Elektroantriebs in einer elektro-hydraulischen Bremsvorrichtung eines Fahrzeugs vorgeschlagen und unter Schutz gestellt (vgl. Anspruch 11). Des Weiteren wird eine Bremsvorrichtung mit einem solchen Elektroantrieb vorgeschlagen und unter Schutz gestellt (vgl. Anspruch 12). Ferner wird ein Fahrzeug mit einer solchen Bremsvorrichtung unter Schutz gestellt (vgl. Anspruch 13). Vorteilhafte Ausführungsformen der Erfindung sind Gegenstand der Unteransprüche.

Es wird dabei vorgeschlagen, an den einzelnen Statorzähnen einen Spulenträger aus Kunststoff unter Ausbildung eines ersten stirnseitigen Panels anzuspritzen, welches in einer Einbaulage des Stators dem Rotor zugewandt ist, und unter Ausbildung eines zweiten stirnseitigen Panels anzuspritzen, welches dem Rotor in der Einbaulage abgewandt ist, wobei die zugeordnete, der Spule angehörende Drahtwicklung zwischen dem ersten Panel und dem zweiten Panel eingefasst ist.

Nach einer Ausführung der vorliegenden Erfindung wird vorgeschlagen, die einzelnen Drahtwicklungen zwischen dem jeweils zugeordneten ersten und zweiten Panel mit einer Stufung anzubringen.

Erfindungsgemäß ist an den einzelnen Spulenträgern auf Seiten des jeweiligen zweiten Panels ein stiftartiger Verankerungsabschnitt - auch Verankerungsdom genannt - aus Kunststoff angeformt, der sich in einer Längsrichtung des Elektroantriebs durch eine zugeordnete Öffnung im Gehäuseeinsatz bis über eine der Stator-Rotor-Einheit abgewandte Stirnfläche des Gehäuseeinsatzes erstreckt und die Stirnfläche hintergreift, um den Gehäuseeinsatz mit dem Stator formschlüssig zu verbinden. Diese Kunststoff-Verankerungsabschnitte können dabei mit dem Gehäuseeinsatz verstemmt sein.

Unter einer Verstemmung ist dabei eine Herstellung einer kraft- und formschlüssigen Verbindung zwischen dem jeweiligen Verankerungsabschnitt und dem Gehäuseeinsatz zu verstehen, wobei der Verankerungsabschnitt plastisch verformt wird. Es bedarf somit keines zusätzlichen, separaten Elements, um den Gehäuseeinsatz gegenüber dem Stator zur fixieren. Dadurch lässt sich eine Längserstreckung des Elektroantriebs minimieren.

Nach einer weiteren Ausführung der vorliegenden Erfindung umschließt der Gehäuseeinsatz eine Kontaktanordnung zumindest zweier zueinander beabstandeter, elektrisch leitender Kontaktelemente zur elektrischen Versorgung zumindest zweier Phasen der Spule des Stators, wobei die Kontaktelemente durch den Kunststoff voneinander elektrisch isoliert sind.

Die Kontaktelemente weisen dabei erste Kontaktabschnitte zur äußeren Kontaktierung des Stators mit einem Stecker und zweite Kontaktabschnitte zur inneren Kontaktierung des Stators mit den jeweiligen Kontaktelementen auf. Diese ersten und zweiten Kontaktabschnitte werden auch als Kontaktpins oder Kontaktlaschen bezeichnet.

Nach einer weiteren Ausführung der vorliegenden Erfindung ragen die ersten Kontaktabschnitte und die zweiten Kontaktabschnitte in einer Längsrichtung des Elektroantriebs aus dem Kunststoff des Gehäuseeinsatzes aus einer der Stator-Rotor-Einheit abgewandten Stirnfläche des Gehäuseeinsatzes heraus. Auch dadurch lässt sich die Längserstreckung des Elektroantriebs minimieren.

Dabei wird vorgeschlagen, die einzelnen Drahtenden der Zahnpaare in einer Längsrichtung des Elektroantriebes durch zugeordnete Öffnungen im Gehäuseeinsatz bis über eine der Stator-Rotor-Einheit abgewandte Stirnfläche des Gehäuseeinsatzes zu führen und mit dem Gehäuseeinsatz elektrisch zu kontaktieren.

In einer besonders vorteilhaften Ausführung der vorliegenden Erfindung weist die Kontaktanordnung drei zueinander beabstandete, elektrisch leitendende Kontaktelemente zur elektrischen Versorgung dreier Phasen der Spule auf.

Weitere vorteilhafte Weiterbildungen der vorliegenden Erfindung ergeben sich aus den Unteransprüchen und der nachfolgenden Beschreibung bevorzugter Ausführungen. Hierzu zeigen:
- Fig. 1: eine perspektivische Darstellung eines vorgeschlagenen Elektroantriebs,
- Fig. 2: eine Explosionsdarstellung des in Fig. 1 gezeigten Elektroantriebs,
- Fig. 3: eine perspektivische Darstellung einer Anordnung zweier ein Zahnpaar bildender Statorzähne,
- Fig. 4: eine perspektivische Darstellung einer Spule des in Fig. 1 gezeigten Elektroantriebs,

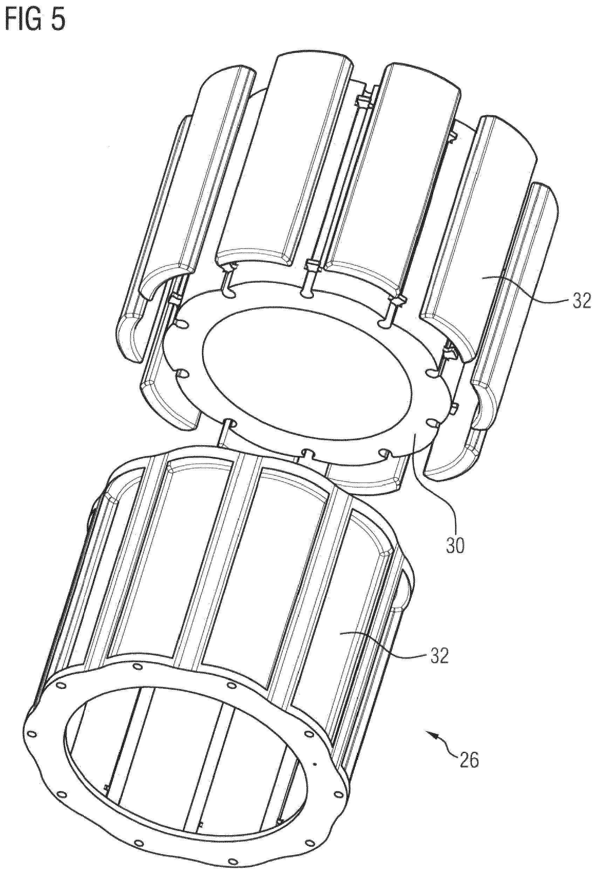

- Fig. 5: eine perspektivische Darstellung eines Rotors des in Fig. 1 gezeigten Elektroantriebs,
- Fig. 6: eine weitere perspektivische Darstellung des in Fig. 1 gezeigten Gehäuseeinsatzes nebst der in Fig. 4 gezeigten Spule,
- Fig. 7: eine vergrößerte perspektivische Darstellung einer inneren Kontaktierung der in Fig. 4 gezeigten Spule,
- Fig. 8: eine vergrößerte perspektivische Darstellung einer Verbindung zwischen dem in Fig. 1 gezeigten Gehäuseeinsatz und der in Fig. 4 gezeigten Spule,

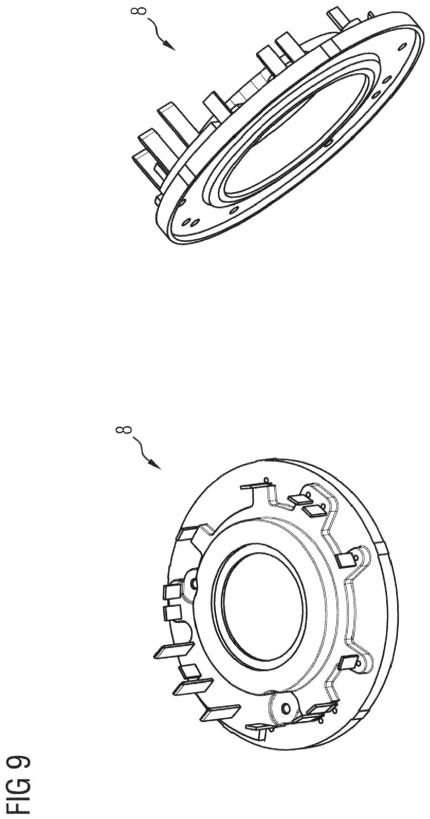

- Fig. 9: zwei weitere perspektivische Ansichten des Gehäuseeinsatzes,
- Fig. 10: drei Kontaktelemente des Gehäuseeinsatzes mit unver-bogenen und verbogenen ersten und zweiten Kontakt-abschnitten.

Der vorgeschlagene Elektroantrieb 2 ist zur Verwendung in einer elektro-hydraulischen Bremsvorrichtung vorgesehen. Der Elektroantrieb 2 ist als ein elektronisch kommutierter, drei-phasiger (Phasen U, V, W) Gleichstrommotor in Gestalt eines Innenläufers ausgebildet. Der Elektroantrieb 2 umfasst ein Gehäuse 4, welches z.B. aus einem tiefgezogenen Blech ausgebildet ist und welches über einen Flansch 6 an ein Gehäuse der elektro-hydraulischen Bremsvorrichtung anbringbar ist. Im Gehäuse 6 ist eine Stator-Rotor-Einheit 18, 26 verbaut, welche einen - hier nicht dargestellten - Kugelgewindetrieb zur Verschiebung eines Kolbens einer Zylinder-Kolben-Anordnung zur Erzeugung eines Bremsdruckes antreibt.

Im Zusammenhang mit einer anderen, als der hier vorgeschlagenen Applikation kann der im Rahmen dieser Figurenbeschreibung vorgeschlagene Elektroantrieb auch als ein elektronisch kommutierter Wechselstrommotor betrieben werden.

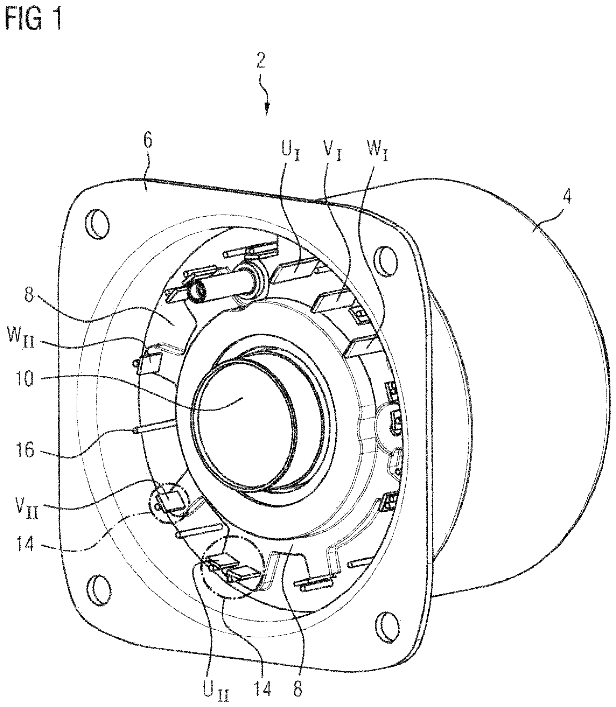

Mit dem Gehäuse 4 ist ferner ein separater, mit Kunststoff umspritzter Gehäuseeinsatz 8 gefügt, durch dessen mittige Öffnung sich ein Abschnitt 10 eines Rohrs 28 eines Rotors 26 erstreckt, in welchem der besagte Kugelgewindetrieb angeordnet ist (vgl. Fig. 1). Mit "separat" ist hierbei gemeint, dass der Gehäuseeinsatz 8 nicht Teil des Stators 18 ist.

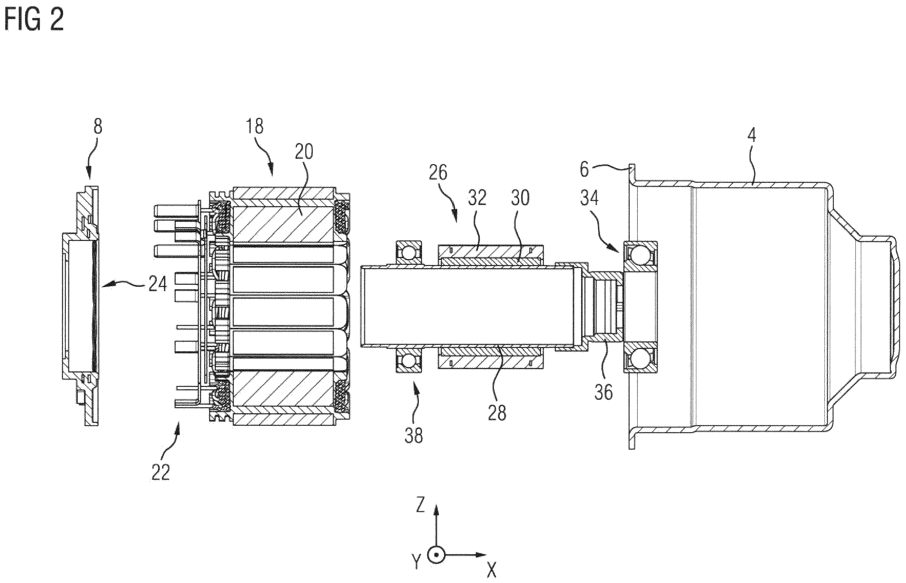

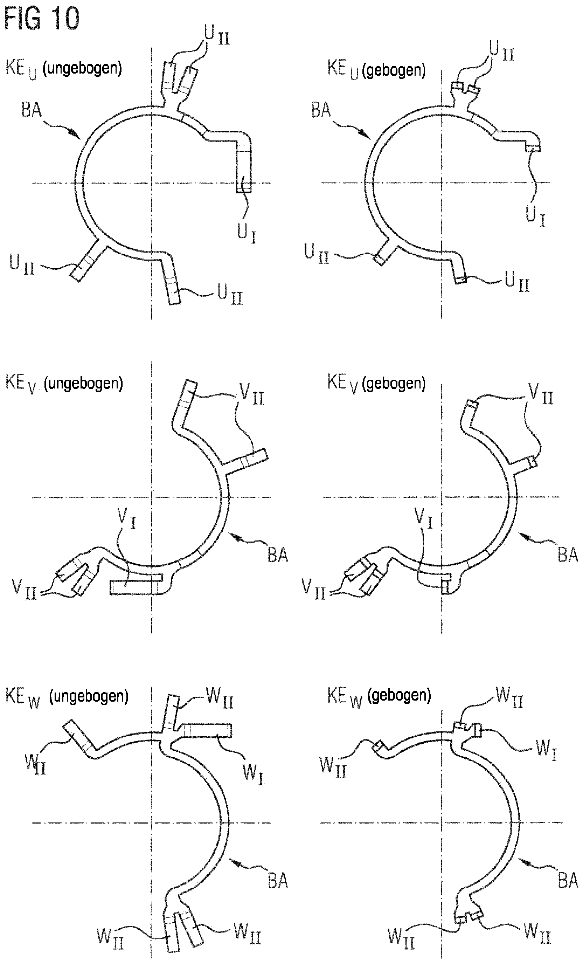

Der Gehäuseeinsatz 8 umschließt dabei eine Kontaktanordnung 22 von drei zueinander beabstandeten, elektrisch leitendenden Kontaktelementen KE_{U}, KE_{V}, KE_{W} (vgl. Fig. 2 i.V.m. Fig. 10), welche durch den Kunststoff des Gehäuseeinsatzes 8 voneinander elektrisch isoliert sind. Jedes der Kontaktelemente KE_{U}, KE_{V}, KE_{W} weist dabei einen teilkreisförmigen Basisabschnitt BA auf, an welchem ein einziger, erster Kontaktabschnitt U_{I}, V_{I}, W_{I} sowie insgesamt vier zweite Kontaktabschnitte U_{II}, V_{II}, W_{II} angeformt sind (vgl. Fig. 10).

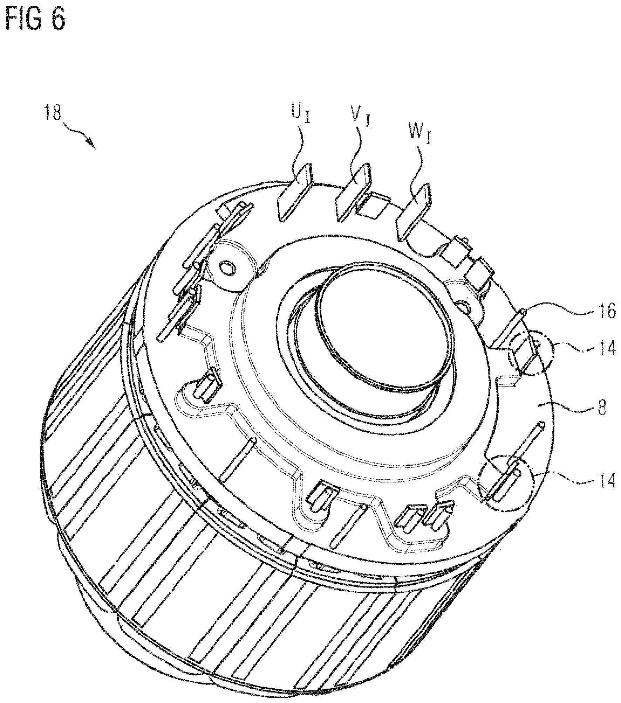

Aus einer der Stator-Rotor-Einheit 18, 26 abgewandten Stirnfläche des Gehäuseeinsatzes 8 ragen dabei sowohl die ersten Kontaktabschnitte U_{I}, V_{I}, W_{I} als auch die zweiten Kontaktabschnitte U_{II}, V_{II}, W_{II} heraus. Des Weiteren sind einzelne Drahtenden D_{A}, D_{E} einer Spule 20 eines Stators 18 durch zugeordnete Öffnungen im Gehäuseeinsatz 8 durch den Gehäuseeinsatz 8 nach außen geführt, so dass auch diese Drahtenden aus der besagten Stirnfläche herausragen. Mit einem Drahtende ist dabei entweder ein Drahtanfang D_{A} (A = Anfang) oder ein Drahtende D_{E} (E = Ende) einer Drahtwicklung DW_{U}, DW_{V}, DW_{W} der Spule 20 gemeint. Im Ausführungsbeispiel bilden insgesamt 6 Drahtwicklungen die Spule 20 aus. Diese Drahtenden sind dabei mit den jeweils zugeordneten zweiten Kontaktabschnitten U_{II}, V_{II}, W_{II} kontaktiert. Die Drahtenden können dabei mit den jeweiligen Kontaktabschnitten U_{II}, V_{II}, W_{II} durch eine Widerstandsverschweißung stoffschlüssig verbunden sein (vgl. Verbindung 14 in Fig. 1 oder Fig. 6).

Die ersten Kontaktabschnitte U_{I}, V_{I}, W_{I} dienen der äußeren Kontaktierung des Stators 18 mit einem Stecker. Die zweiten Kontaktabschnitte U_{II}, V_{II}, W_{II} hingegen dienen der inneren Kontaktierung des Stators 18 mit den drei Kontaktelementen KE₁, KE₂, KE₃ (vgl. Fig. 2 i.V.m. Fig. 10), die jeweils einer von drei Phasen U, V, W der Spule 20 zugeordnet sind.

Die Kontaktabschnitte U_{II}, V_{II}, W_{II} sind dabei paarweise einem Spulenabschnitt, d.h. einem Anfang einer Drahtwicklung DW_{U} und einem Ende einer dazu benachbarten Drahtwicklung DW_{V}, DW_{W} zugeordnet, wobei der Spulenabschnitt einer der Phasen U, V, W der Spule 20 angehört. Die sich gegenüber liegenden Paare der Kontaktabschnitte U_{II}, V_{II}, W_{II} kontaktieren dabei je einen, derselben Phase U, V oder W angehörenden Spulenabschnitt (vgl. Fig. 10). Die Teilung der Kontaktelemente KE_{U}, KE_{V}, KE_{W} kann dabei derart sein, dass die Beabstandung zwischen den einander zugeordneten Kontaktabschnitten U_{II}, V_{II}, W_{II} unterschiedlich ausfällt (vgl. Fig. 10). Diese Beabstandung kann aber grundsätzlich auch identisch ausfallen, sofern die Drahtenden D_{A}, D_{E} der Spule 20 entsprechend weggeführt sind.

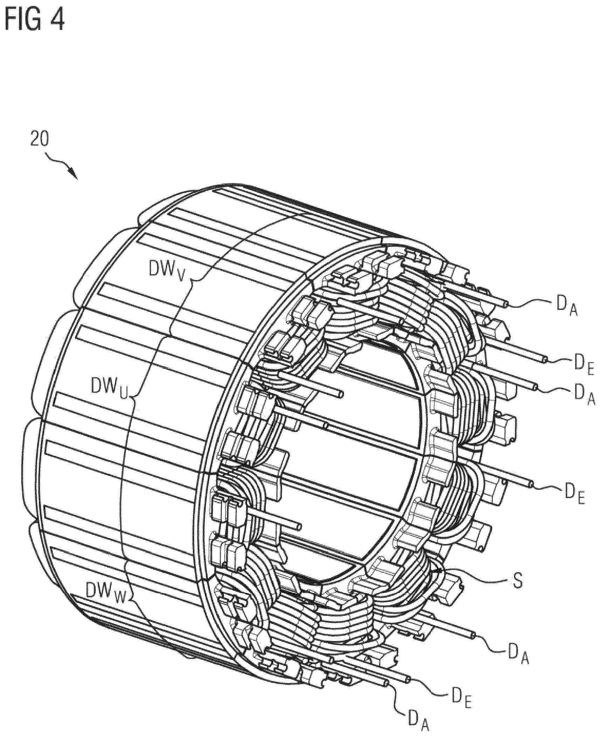

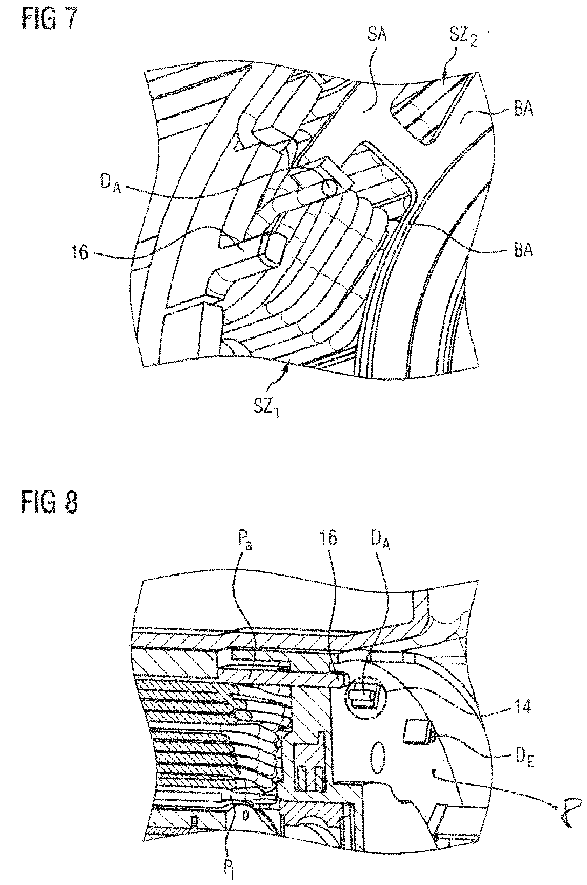

Die Fig. 2 und Fig. 7 i.V.m. mit der Fig. 10 veranschaulichen dabei, dass zwei benachbarte der pro Kontaktelement KE_{U}, KE_{V}, KE_{W} vorgesehenen insgesamt vier zweiten Kontaktabschnitte U_{II}, V_{II}, W_{II}, die als solche über einen zugeordneten Stegabschnitt SA am Basisabschnitt BA angeformt sind, einen Drahtanfang D_{A} einer der Drahtwicklungen DW_{U}, DW_{V}, DW_{W} mit einem Drahtende D_{E} einer dazu benachbarten Drahtwicklung DW_{U}, DW_{V}, DW_{W} verbinden. Diese beiden benachbarten Drahtwicklungen DW_{U}, DW_{V}, DW_{W} gehören dabei einer der drei Phasen U, V, W an (vgl. Fig. 4).

Ferner ragen aus der besagten Stirnfläche auch einzelne stiftartige Verankerungsabschnitte 16 aus Kunststoff des Stators 18 heraus, welche am Stator 18 angeformt sind und sich durch zugeordnete Öffnungen im Gehäuseeinsatz 8 durch den Gehäuseeinsatz 8 erstrecken. Diese Kunststoff-Verankerungsabschnitte 16 sind dabei mit dem Gehäuseeinsatz 8 formschlüssig verstemmt, etwa durch eine sog. Heißverstemmung.

Zur Versteifung des Gehäuses 4 können im Bereich des Flansches 6 gleichmäßig zueinander beabstandete Ausbeulungsbereiche im Gehäuseblech vorgesehen sein, in welchen jeweils eine radial nach innen orientierte Ausbeulung ausgebildet ist. Im Bereich der jeweiligen Ausbeulungen ist ferner ein Befestigungsloch im Flansch ausgebildet, um das Gehäuse 4 am Gehäuse der elektro-hydraulischen Bremsvorrichtung anbringen zu können.

Der Stator 18 ist mit dem Gehäuse 4 klemmend gefügt. Der vom Stator 18 umschlossene, permanent magnetisierte Rotor 26 umfasst ein Rohr 28, welches mit einer Nabe 30 pressverbunden ist. Die Nabe 30 trägt dabei eine Anordnung einer Mehrzahl von Permanentmagneten 32 in Gestalt von Schalenmagneten, die als solche mit der Spule 20 zusammenwirken. Das Rohr 28 ist ferner an einem seiner beiden Enden mit einer Lagerbuchse 36 laserverschweißt, welche sich als solche durch ein als "Festlager" fungierendes Schrägkugellager 34 erstreckt, über welches das Rohr 28 im Bereich eines Endes des Gehäuses 4 aufgenommen ist. Das Rohr 28 ist zudem durch ein als "Loslager" fungierendes Kugellager 38 aufgenommen, welches durch den Gehäuseeinsatz 8 zentrierend aufgenommen ist. Dabei drückt der Gehäuseeinsatz 8 über ein z.B. ringförmiges Federelement 24 - bspw. in Gestalt einer Wellfeder -, welches als solches vom Gehäuseeinsatz 8 eingefasst ist, gegen das Kugellager 38 bzw. dessen äußeren Ring. Das Federelement 24 kann dabei mit dem Gehäuseeinsatz 8 stoffschlüssig verbunden sein, indem es bei der Kunststoffumspritzung des Gehäuseeinsatzes 8 entsprechend mit umspritzt wird. Ferner deckt der Gehäuseeinsatz 8 die Stator-Rotor-Einheit 18, 26 im Sinne eines Schildes bzw. Gehäuse- und Lagerschildes ab.

Zusammenfassend vereint der Gehäuseeinsatz 8 folgende Funktionen:
- Aufnahme und Zentrierung des Loslagers 38,
- Verspannung des Loslagers 38,
- Innere und äußere Kontaktierung der Spule 20,
- Formschluss-Verbindung mit dem Stator 18 und
- Abdeckung der Stator-Rotor-Einheit 18, 26.

Die Integration all dieser Funktionen in den separaten Gehäuseeinsatz 8 geht mit einer Reduktion von Herstellungskosten und einer vereinfachten Montage eines solchen Elektroantriebs 2 einher. Hinzu kommt eine sehr kompakte Bauweise des Elektroantriebs 2.

Der vorgeschlagene Gehäuseeinsatz 8 reduziert zudem die in der Längsrichtung X - X des Elektroantriebs 2 zu berücksichtigenden Längentoleranzen (Reduktion einer Längentoleranzkette).

Zudem bewirkt die Integration der Kontaktanordnung 22 in den Gehäuseeinsatz 8 eine sehr kompakte bzw. sehr dichte Anordnung der die Spule 20 bildenden, einzelnen Drahtwicklungen DW_{U}, DW_{V}, DW_{W} im Gehäuse 4 (kompaktes bzw. dichtes "Packaging"), weil eine einen Abschnitt - z.B. einen Endabschnitt des Stators 18 - einfassende Kunststoffumspritzung entfällt, die als solche die besagte Kontaktanordnung umfasst.

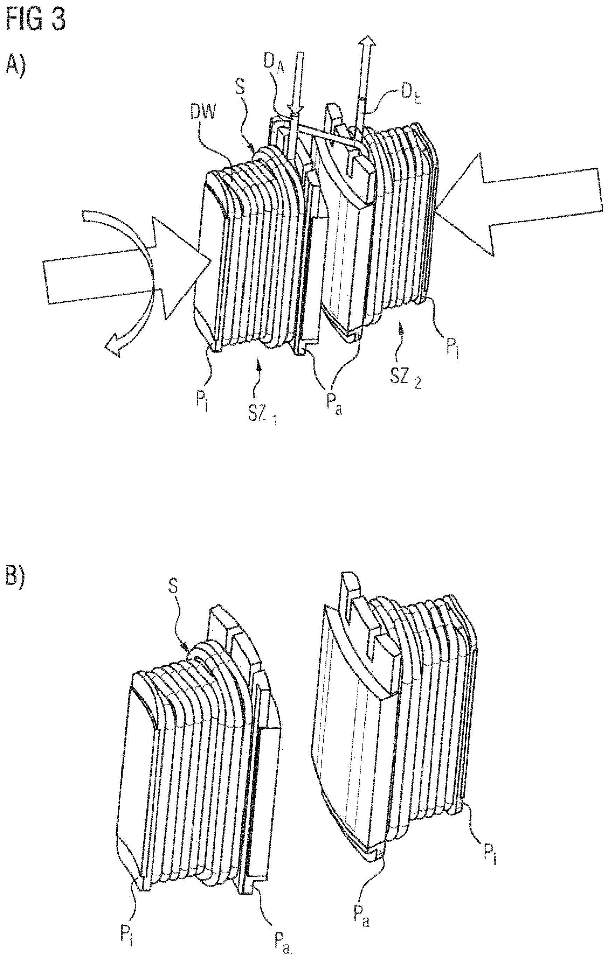

Der im Gehäuse 4 klemmend angeordnete Stator 18 umfasst dabei beispielhaft eine ringförmige Anordnung von insgesamt zwölf magnetisierbaren, Pole bildenden Statorzähnen SZ₁, SZ₂ ... SZ₁₁, SZ₁₂. Diese Statorzähne SZ₁, SZ₂... SZ₁₁, SZ₁₂ sind dabei in separate Zahnpaare SZ₁ & SZ₂, SZ₃ & SZ₄ ... SZ₁₁ & SZ₁₂ unterteilt, wobei jedes der Zahnpaare SZ₁ & SZ₂, SZ₃ & SZ₄ ... SZ₁₁ & SZ₁₂ mit einem eigenen, gemeinsamen und einen Teil der Spule 20 bildenden Metalldraht umwickelt ist (vgl. Fig. 3 und Fig. 4). Die beiden Drahtenden D_{A}, D_{E} der jeweiligen Zahnpaare (Fig. 3) sind dabei mit dem zuvor beschriebenen Gehäuseeinsatz 8 elektrisch kontaktiert.

Die einzelnen Statorzähne SZ₁, SZ₂ ... SZ₁₁, SZ₁₂ sind dabei aus einzelnen Blechlagen zu einem Blechpaket zusammengesetzt. Die einzelnen Blechpakete werden dabei mittels einer Verprägung zusammengehalten, die als solche mittels eines Stanzstempels in einer Längserstreckung X - X des Blechpakets erzeugt wird. Die Verprägung erstreckt sich dabei über die gesamte Längserstreckung X - X des jeweiligen Blechpakets, so dass zwischen den einzelnen Blechlagen ein Formschluss entsteht, der die Blechlagen zusammenhält.

An den einzelnen Statorzähnen SZ₁, SZ₂ ... SZ₁₁, SZ₁₂ ist dabei ein Spulenträger aus Kunststoff unter Ausbildung eines ersten Panels Pᵢ (i = innen) im Bereich des ersten stirnseitigen Endes des Statorzahnes und unter Ausbildung eines zweiten Panels Pₐ (a = außen) im Bereich des zweiten stirnseitigen Endes des Statorzahnes angespritzt. Das erste stirnseitige Panel Pᵢ ist dabei in einer Einbaulage des Stators 18 dem Rotor 26 zugewandt, wohingegen das zweite stirnseitige Panel Pₐ in der Einbaulage des Stators 18 dem Rotor 26 abgewandt ist. Daher kann das erste Panel Pᵢ auch als inneres Panel und das zweite Panel Pₐ auch als äußeres bezeichnet werden. Die dem jeweiligen Statorzahn zugeordnete, der Spule 20 angehörende Drahtwicklung DW_{U}, DW_{V}, DW_{W} ist dabei zwischen dem Panel Pᵢ und dem Panel Pₐ eingefasst. Der Spulenträger kann dabei derart verspritzt sein, dass er den jeweiligen Statorzahn entweder vollständig oder auch nur teilweise umhüllt (vgl. z.B. Fig. 3).

Die Fig. 3 veranschaulicht eine Anordnung zweier ein Zahnpaar bildender Statorzähne SZ₁, SZ₂, die zur gemeinsamen Umwicklung mit einem Metalldraht derart gegenüber liegend angeordnet werden, dass sich zunächst die in der Gebrauchslage des Zahnpaares äußeren Enden - bzw. die zweiten stirnseitigen Enden - gegenüber liegen.

Umwickelt wird dabei derart, dass in Bezug auf einen der beiden Zähne - hier SZ₁ - gegen den Uhrzeigersinn gewickelt wird, wohingegen in Bezug auf den anderen Zahn - hier SZ₂ - im Uhrzeigersinn gewickelt wird. Ferner wird derart umwickelt, dass sich zwischen dem jeweiligen ersten und zweiten Panel Pᵢ, Pₐ eine Stufung S in der Drahtwicklung DW_{U}, DW_{V}, DW_{W} ausbildet, wobei der dem Panel Pₐ zugewandte, äußere Drahtwicklungsabschnitt gegenüber dem dazu innenliegenden bzw. inneren Drahtwicklungsabschnitt stärker ausfällt. Aus diesem Grund ist auch das Panel Pₐ gegenüber dem Panel Pᵢ länger ausgebildet. Nach der Umwicklung werden die beiden Statorzähne SZ₁, SZ₂ zueinander verschwenkt (vgl. Pfeildarstellung in Fig. 3), um schließlich in das Gehäuse 4 gemäß der Darstellung in Fig. 4 eingesetzt werden zu können. Demnach werden bei der beschriebenen, beispielhaft zu verstehenden Ausführungsform insgesamt sechs Zahnpaare SZ₁ & SZ₂, SZ₃ & SZ₄ ... SZ₁₁ & SZ₁₂ nacheinander in das Gehäuse 4 eingesetzt. Die einzelnen Statorzähne SZ₁, SZ₂ ... SZ₁₁, SZ₁₂ sind dabei im Gehäuse 4 aneinander liegend gegeneinander und gegen das Gehäuse 4 verspannt.

An den einzelnen Spulenträgern ist auf Seiten des jeweiligen Panels Pₐ ein mit dem Spulenträger umspritzter, stiftartiger Verankerungsabschnitt 16 - auch Verankerungsdom genannt - angeformt, welcher in einer Längsrichtung X - X des Elektroantriebs 2 aus dem Panel Pₐ herausragt und welcher gewissermaßen eine Verlängerung des Panels Pₐ darstellt (vgl. Fig. 7 und Fig. 8). Dieser Verankerungsabschnitt 16 erstreckt sich dabei - wie bereits zuvor beschrieben - durch eine zugeordnete Öffnung im Gehäuseeinsatz 8 bis über eine der Stator-Rotor-Einheit 18, 26 abgewandte Stirnfläche des Gehäuseeinsatzes 8, welche der Verankerungsabschnitt 16 zum Zwecke eines Formschlusses hintergreift. Es wird an dieser Stelle auf die zuvor erwähnte Heißverstemmung der einzelnen Verankerungsabschnitte 16 verwiesen, durch die ein unlösbarer Formschluss zwischen dem Gehäuseeinsatz 8 und dem Stator 18 bewirkt wird.

Die einzelnen Drahtenden D_{A}, D_{E} der Zahnpaare SZ₁ & SZ₂, SZ₃ & SZ₄ ... SZ₁₁ & SZ₁₂ sind in der Längsrichtung X - X des Elektroantriebes 2 durch zugeordnete Öffnungen im Gehäuseeinsatz 8 bis über die besagte, der Stator-Rotor-Einheit 18, 26 abgewandte Stirnfläche des Gehäuseeinsatzes 8 geführt und mit dem Gehäuseeinsatz 8 über jeweils zugeordnete Kontaktabschnitte U_{II}, V_{II}, W_{II} elektrisch kontaktiert. Die Kontaktierung ist dabei derart, dass jeweils ein Drahtanfang D_{A} einer der Drahtwicklungen DW_{U}, DW_{V}, DW_{W} mit einem Drahtende D_{E} einer dazu benachbarten Drahtwicklung DW_{U}, DW_{V}, DW_{W} mittels der vom Gehäuseeinsatz 8 umschlossenen Kontaktanordnung 22, und zwar über eines der besagten Kontaktelemente KE_{U}, KE_{V}, KE_{W} verbunden ist. Diese jeweils benachbarten und miteinander verbundenen Drahtwicklungen DW_{U}, DW_{V}, DW_{W} gehören dabei einer der drei Phasen U, V, W an.

Die vorgeschlagene Spulenausbildung trägt ebenfalls zu einer sehr kompakten bzw. sehr dichten Anordnung der die Spule 20 bildenden, einzelnen Drahtwicklungen DW_{U}, DW_{V}, DW_{W} bei (kompaktes bzw. dichtes "Packaging") . In Verbindung mit dem vorgeschlagenen Gehäuseeinsatz 8 ergibt sich im Ergebnis ein sehr kompakter Elektroantrieb 2, welcher zudem einfach hergestellt und montiert werden kann. Der Elektroantrieb 2 ist zudem kostengünstig herstellbar.

Obwohl in der vorhergehenden Beschreibung exemplarische Ausführungen erläutert sind, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Elektroantrieb (2) zur Verwendung in einer elektro-hydraulischen Bremsvorrichtung, umfassend:
• ein Gehäuse (4) sowie
• eine durch das Gehäuse (4) aufgenommene Stator-Rotor-Einheit (18, 26) zur Verschiebung eines Kolbens einer Zylinder-Kolben-Anordnung zur Erzeugung eines Bremsdruckes,
wobei die Stator-Rotor-Einheit (18, 26) einen Stator (18) mit einer Anordnung einer Mehrzahl magnetisierbarer, Pole bildender Statorzähne (SZ₁, SZ₂ ... SZ₁₁, SZ₁₂) aufweist, wobei die Statorzähne (SZ₁, SZ₂ ... SZ₁₁, SZ₁₂) in separate, in das Gehäuse (4) eingesetzte Zahnpaare (SZ₁ & SZ₂, SZ₃ & SZ₄ ... SZ₁₁ & SZ₁₂) unterteilt sind, wobei jedes der Zahnpaare (SZ₁ & SZ₂, SZ₃ & SZ₄ ... SZ₁₁ & SZ₁₂) mit einem eigenen, gemeinsamen und einen Teil der Spule (20) bildenden Metalldraht umwickelt ist, dessen zwei Drahtenden (D_{A}, D_{E}) mit einem separaten Gehäuseeinsatz (8) aus Kunststoff elektrisch kontaktiert sind, welcher mit dem Gehäuse (4) gefügt ist und dabei die Stator-Rotor-Einheit (18, 26) abdeckt,
wobei die einzelnen Statorzähne (SZ₁, SZ₂ ... SZ₁₁, SZ₁₂) im Gehäuse (4) aneinander liegend gegeneinander und gegen das Gehäuse (4) verspannt sind,
wobei an den einzelnen Statorzähnen (SZ1, SZ2 ... SZ11, SZ12) ein Spulenträger aus Kunststoff unter Ausbildung eines ersten stirnseitigen Panels (Pi; i = innen) angespritzt ist, welches in einer Einbaulage des Stators (18) dem Rotor (26) zugewandt ist, und unter Ausbildung eines zweiten stirnseitigen Panels (Pa; a = außen) angespritzt ist, welches dem Rotor (26) in der Einbaulage abgewandt ist, wobei die zugeordnete, der Spule (20) angehörende Drahtwicklung (DWU, DWV, DWW) zwischen dem ersten Panel (Pi) und dem zweiten Panel (Pa) eingefasst ist,
**dadurch gekennzeichnet, dass** an den einzelnen Spulenträgern auf Seiten des jeweiligen zweiten Panels (Pa) ein stiftartiger Verankerungsabschnitt (16) aus Kunststoff angeformt ist, der sich in einer Längsrichtung (X - X) des Elektroantriebs (2) durch eine zugeordnete Öffnung im Gehäuseeinsatz (8) bis über eine der Stator-Rotor-Einheit (18, 26) abgewandte Stirnfläche des Gehäuseeinsatzes (8) erstreckt und die Stirnfläche hintergreift.

2. Elektroantrieb (2) nach Anspruch 1, wobei die einzelnen Drahtwicklungen (DWu, DWv, DWw) zwischen dem jeweils zugeordneten ersten und zweiten Panel (Pᵢ, Pₐ) eine Stufung aufweisen.

3. Elektroantrieb nach Anspruch 1 oder 2, wobei die einzelnen Kunststoff-Verankerungsabschnitte (16) mit dem Gehäuseeinsatz (8) verstemmt sind.

4. Elektroantrieb nach einem der Ansprüche 1 bis 3, wobei der Gehäuseeinsatz (8) eine Kontaktanordnung (22) zumindest zweier zueinander beabstandeter, elektrisch leitender Kontaktelemente (KE_{U}, KE_{V}, KE_{W}) zur elektrischen Versorgung zumindest zweier Phasen (U, V, W) der Spule (20) des Stators (18) umschließt, wobei die Kontaktelemente (KE_{U}, KE_{V}, KE_{W}) durch den Kunststoff voneinander isoliert sind.

5. Elektroantrieb nach Anspruch 4, wobei die Kontaktelemente (KE_{U}, KE_{V}, KE_{W}) erste Kontaktabschnitte (U_{I}, V_{I}, W_{I}) zur äußeren Kontaktierung des Stators (18) mit einem Stecker und zweite Kontaktabschnitte (U_{II}, V_{II}, W_{II}) zur inneren Kontaktierung des Stators (18) mit den jeweiligen Kontaktelementen (KE_{U}, KE_{V}, KE_{W}) aufweisen.

6. Elektroantrieb nach Anspruch 5, wobei die ersten Kontaktabschnitte (U_{I}, V_{I}, W_{I}) und die zweiten Kontaktabschnitte (U_{II}, V_{II}, W_{II}) in einer Längsrichtung (X - X) des Elektroantriebs (2) aus dem Kunststoff des Gehäuseeinsatzes (8) aus einer der Stator-Rotor-Einheit (18, 26) abgewandten Stirnfläche des Gehäuseeinsatzes (8) herausragen.

7. Elektroantrieb nach einem der Ansprüche 1 bis 6, wobei die einzelnen Drahtenden (D_{A}, D_{E}) der Zahnpaare (SZ₁ & SZ₂, SZ₃ & SZ₄ ... SZ₁₁ & SZ₁₂) in einer Längsrichtung (X - X) des Elektroantriebes (2) durch zugeordnete Öffnungen im Gehäuseeinsatz (8) bis über eine der Stator-Rotor-Einheit (18, 26) abgewandte Stirnfläche des Gehäuseeinsatzes (8) geführt und mit dem Gehäuseeinsatz (8) elektrisch kontaktiert sind.

8. Elektroantrieb nach einem der Ansprüche 4 bis 7, wobei die Kontaktanordnung (22) drei zueinander beabstandete, elektrisch leitendende Kontaktelemente (KE_{U}, KE_{V}, KE_{W}) zur elektrischen Versorgung dreier Phasen (U, V, W) der Spule (20) aufweist.

9. Elektroantrieb nach einem der Ansprüche 1 bis 8, wobei eine ringförmige Anordnung mit zwölf Statorzähnen (SZ₁, SZ₂. SZ₁₁, SZ₁₂) vorgesehen ist, welche insgesamt sechs Zahnpaare (SZ₁ & SZ₂, SZ₃ & SZ₄ ... SZ₁₁ & SZ₁₂) bilden.

10. Elektroantrieb nach einem der Ansprüche 1 bis 9, wobei das Gehäuse (4) aus einem tiefgezogenen Blech ausgebildet ist.

11. Verwendung eines Elektroantriebs nach einem der Ansprüche 1 bis 10 in einer elektro-hydraulischen Bremsvorrichtung.

12. Bremsvorrichtung mit einem Elektroantrieb nach einem der Ansprüche 1 bis 10.

13. Fahrzeug mit einer Bremsvorrichtung nach Anspruch 12.

## Claims

1. Electric drive (2) for use in an electrohydraulic brake system, comprising:
• a housing (4) and
• a stator-rotor unit (18, 26) received by the housing (4) for displacing a piston of a cylinder-piston arrangement in order to generate a brake pressure,
wherein the stator-rotor unit (18, 26) comprises a stator (18) with an arrangement of a plurality of magnetizable, pole-forming stator teeth (SZ₁, SZ₂ ... SZ₁₁, SZ₁₂), wherein the stator teeth (SZ₁, SZ₂ ... SZ₁₁, SZ₁₂) are subdivided into separate tooth pairs (SZ₁ & SZ₂, SZ₃ & SZ₄ ... SZ₁₁ & SZ₁₂) inserted into the housing (4), wherein each of the tooth pairs (SZ₁ & SZ₂, SZ₃ & SZ₄ ... SZ₁₁ & SZ₁₂) is wrapped with its own common metal wire forming a part of the coil (20), the two wire ends (D_{A}, D_{E}) of which are electrically contacted with a separate housing insert (8) made of plastic, which is joined to the housing (4) and thereby covers the stator-rotor unit (18, 26);
wherein the individual stator teeth (SZ₁, SZ₂ ... SZ₁₁, SZ₁₂) are braced against one another in the housing (4) while lying on one another and are braced against the housing (4);
wherein the individual stator teeth (SZ₁, SZ₂ ... SZ₁₁, SZ₁₂) are overmoulded with a coil carrier made of plastic with the formation of a first end panel (Pi; i = inner), which, in an installed position of the stator (18), faces the rotor (26), and overmoulded with the formation of a second end panel (Pₒ; o = outer), which faces away from the rotor (26) in the installed position, wherein the associated wire winding (DWu, DWv, DWw) belonging to the coil (20) is enclosed between the first panel (Pi) and the second panel (Pₒ);
**characterized in that**
a pin-like anchoring section (16) made of plastic is integrally formed on the individual coil carriers on the side of the respective second panel (Pₒ) and extends in a longitudinal direction (X - X) of the electric drive (2) through an associated opening in the housing insert (8) beyond an end face of the housing insert (8) facing away from the stator-rotor unit (18, 26) and engages behind the end face.

2. Electric drive (2) according to Claim 1, wherein the individual wire windings (DWu, DWv, DWw) have a gradation between the respectively assigned first and second panel (Pᵢ, Pₒ).

3. Electric drive according to Claim 1 or 2, wherein the individual plastic anchoring sections (16) are caulked with the housing insert (8).

4. Electric drive according to one of Claims 1 to 3, wherein the housing insert (8) encloses a contact arrangement (22) of at least two spaced-apart, electrically conducting contact elements (KEu, KEv, KE_{W}) for the electrical supply of at least two phases (U, V, W) of the coil (20) of the stator (18), wherein the contact elements (KE_{U}, KE_{V}, KE_{W}) are insulated from one other by the plastic.

5. Electric drive according to Claim 4, wherein the contact elements (KE_{U}, KE_{V}, KE_{W}) have first contact sections (U_{I}, V_{I}, W_{I}) for external contacting of the stator (18) with a plug and second contact sections (U_{II}, V_{II}, W_{II}) for internal contacting of the stator (18) with the respective contact elements (KEu, KEv, KEw) .

6. Electric drive according to Claim 5, wherein the first contact sections (U_{I}, V_{I}, W_{I}) and the second contact sections (U_{II}, V_{II}, W_{II}) protrude in a longitudinal direction (X - X) of the electric drive (2) from the plastic of the housing insert (8) from an end face of the housing insert (8) facing away from the stator-rotor unit (18, 26).

7. Electric drive according to one of Claims 1 to 6, wherein the individual wire ends (D_{A}, D_{E}) of the tooth pairs (SZ₁ & SZ₂, SZ₃ & SZ₄ ... SZ₁₁ & SZ₁₂) are routed in a longitudinal direction (X - X) of the electric drive (2) through associated openings in the housing insert (8) beyond an end face of the housing insert (8) facing away from the stator-rotor unit (18, 26) and electrically contacted with the housing insert (8).

8. Electric drive according to one of Claims 4 to 7, wherein the contact arrangement (22) has three spaced-apart, electrically conducting contact elements (KE_{U}, KE_{V}, KE_{W}) for the electrical supply of three phases (U, V, W) of the coil (20).

9. Electric drive according to one of Claims 1 to 8, wherein there is provided an annular arrangement with twelve stator teeth (SZ₁, SZ₂ SZ₁₁, SZ₁₂) which form a total of six tooth pairs (SZ₁ & SZ₂, SZ₃ & SZ₄ ... SZ₁₁ & SZ₁₂) .

10. Electric drive according to one of Claims 1 to 9, wherein the housing (4) is formed from a deep-drawn metal sheet.

11. Use of an electric drive according to one of Claims 1 to 10 in an electrohydraulic brake system.

12. Brake system with an electric drive according to one of Claims 1 to 10.

13. Vehicle with a brake system according to Claim 12.

## Revendications

1. Entraînement électrique (2) destiné à être utilisé dans un dispositif de freinage électrohydraulique, ledit entraînement électrique comprenant :
• un boîtier (4) et
• une unité stator-rotor (18, 26) logée dans le boîtier (4) et destinée à déplacer un piston d'un ensemble cylindre-piston afin de générer une pression de freinage,
l'unité stator-rotor (18, 26) comportant un stator (18) pourvu d'un ensemble de plusieurs dents de stator magnétisables (SZ₁, SZ₂ ... SZ₁₁, SZ₁₂) formant des pôles, les dents de stator (SZ₁, SZ₂ ... SZ₁₁, SZ₁₂) étant divisées en paires de dents séparées (SZ₁ & SZ₂, SZ₃ & SZ₄ ... SZ₁₁ & SZ₁₂) insérées dans le boîtier (4), chacune des paires de dents (SZ₁ & SZ₂, SZ₃ & SZ₄ ... SZ₁₁ & SZ₁₂) étant enroulée par son propre fil métallique commun qui fait partie de la bobine (20) et dont les deux extrémités de fil (D_{A}, D_{E}) sont en contact électrique avec un insert de boîtier séparé (8) en matière synthétique qui est assemblé au boîtier (4) et recouvre ainsi l'unité stator-rotor (18, 26),
les dents de stator individuelles (SZ₁, SZ₂ ... SZ₁₁, SZ₁₂) étant serrées les unes contre les autres dans le boîtier (4) et contre le boîtier (4),
un support de bobine en matière synthétique étant moulé par injection sur les dents de stator individuelles (SZ₁, SZ₂ ... SZ₁₁, SZ₁₂) en formant un premier panneau côté frontal (Pi ; i = intérieur) qui est dirigé vers le rotor (26) lorsque le stator (18) est monté et étant moulé par injection en formant un deuxième panneau côté frontal (Pa ; a = extérieur) qui est dirigé à l'opposé du rotor (26) lorsqu'il est monté,
l'enroulement de fil associé (DWU, DWV, DWW), qui appartient à la bobine (20), étant inséré entre le premier panneau (Pi) et le deuxième panneau (Pa),
**caractérisé en ce qu'**une portion d'ancrage (16) en forme de tige en matière synthétique est moulée sur les supports de bobine individuels sur des côtés du deuxième panneau respectif (Pa), laquelle portion d'ancrage s'étend dans une direction longitudinale (X-X) de l'entraînement électrique (2) à travers une ouverture associée ménagée dans l'insert de boîtier (8) au-delà d'une surface frontale de l'insert de boîtier (8) qui est dirigée à l'opposé de l'unité stator-rotor (18, 26) et qui s'engage en arrière de la surface frontale.

2. Entraînement électrique (2) selon la revendication 1, les enroulements de fil individuels (DW_{U}, DW_{V}, DW_{W}) comportant un étagement entre les premier et deuxième panneaux (Pi, Pa) respectivement associés.

3. Entraînement électrique selon la revendication 1 ou 2, les portions d'ancrage individuelles (16) en matière synthétique étant matées sur l'insert de boîtier (8).

4. Entraînement électrique selon l'une des revendications 1 à 3, l'insert de boîtier (8) renfermant un ensemble de contact (22) d'au moins deux éléments de contact électriquement conducteurs (KEu, KE_{V}, KE_{W}) qui sont espacés l'un de l'autre et qui sont destinés à l'alimentation électrique d'au moins deux phases (U, V, W) de la bobine (20) du stator (18), les éléments de contact (KE_{U}, KE_{V}, KE_{W}) étant isolés l'un de l'autre par la matière synthétique.

5. Entraînement électrique selon la revendication 4, les éléments de contact (KEu, KEv, KEw) comportant des premières portions de contact (U_{I}, Vi, Wi) destiné à la mise en contact externe du stator (18) avec un connecteur et des deuxièmes portions de contact (U_{II}, V_{II}, W_{II}) destinées à la mise en contact interne du stator (18) avec les éléments de contact respectifs (KE_{U}, KE_{V}, KE_{W}) .

6. Entraînement électrique selon la revendication 5, les premières portions de contact (U_{I}, V_{I}, W_{I}) et les deuxièmes portions de contact (U_{II}, V_{II}, W_{II}) faisant saillie de la matière synthétique de l'insert de boîtier (8) émanant d'une surface frontale de l'insert de boîtier (8), qui dirigée à l'opposé des unités stator-rotor (18, 26), dans une direction longitudinale (X-X) de l'entraînement électrique (2).

7. Entraînement électrique selon l'une des revendications 1 à 6, les extrémités de fil individuelles (D_{A}, D_{E}) des paires de dent (SZ₁ & SZ₂, SZ₃ & SZ₄ ... SZ₁₁ & SZ₁₂) étant guidées dans une direction longitudinale (X-X) de l'entraînement électrique (2) à travers des ouvertures associées ménagées dans l'insert de boîtier (8) au-delà d'une surface d'extrémité de l'insert de boîtier (8) qui est dirigée à l'opposé de l'unité stator-rotor (18, 26) et étant en contact électrique avec l'insert de boîtier (8).

8. Entraînement électrique selon l'une des revendications 4 à 7, l'ensemble de contact (22) comportant trois éléments de contact électriquement conducteurs (KE_{U}, KE_{V}, KE_{W}) qui sont espacés l'un de l'autre et qui sont destinés à l'alimentation électrique de trois phases (U, V, W) de la bobine (20).

9. Entraînement électrique selon l'une des revendications 1 à 8,
un ensemble annulaire comprenant douze dents de stator (SZ₁, SZ₂ ... SZ₁₁, SZ₁₂) étant prévu qui forment un total de six paires de dents (SZ₁ & SZ₂, SZ₃ & SZ₄ ... SZ₁₁ & SZ₁₂) .

10. Entraînement électrique selon l'une des revendications 1 à 9, le boîtier (4) étant formé à partir d'une tôle emboutie.

11. Utilisation d'un entraînement électrique selon l'une des revendications 1 à 10 dans un dispositif de freinage électrohydraulique.

12. Dispositif de freinage comprenant un entraînement électrique selon l'une des revendications 1 à 10.

13. Véhicule comprenant un dispositif de freinage selon la revendication 12.
